# EUROPÄISCHE PATENTSCHRIFT

(11) **EP 3 246 277 B1**
(45) Veröffentlichungstag und Bekanntmachung des Hinweises auf die Patenterteilung: **27.01.2021**
(21) Anmeldenummer: 16170142.0
(22) Anmeldetag: 18.05.2016
(51) Int. Cl.: B65G 59/10

(54) **ABSTAPELVORRICHTUNG FÜR SCHALEN**
STACKING DEVICE FOR SHELLS
DISPOSITIF DE DESEMPILAGE DE COQUES

(43) Veröffentlichungstag der Anmeldung: 22.11.2017
(73) Patentinhaber: MULTIVAC Sepp Haggenmüller SE & Co. KG, 87787 Wolfertschwenden (DE)
(72) Erfinder: FICKLER, Bernhard, 87749 Hawangen (DE); MÖRSCHNER, Lars, 87493 Lauben (DE)
(74) Vertreter: Grünecker Patent- und Rechtsanwälte PartG mbB

(56) Entgegenhaltungen:
- WO-A1-2009/150755
- NL-A- 8 005 412
- NL-C1- 1 025 393
- US-A- 4 048 915
- US-A- 5 788 116

## Beschreibung

Die Erfindung bezieht sich auf eine Abstapelvorrichtung für Verpackungs-Schalen gemäß dem Anspruch 1.

Eine gattungsgemäße Schalenabstapelvorrichtung gemäß dem Oberbegriff des Anspruchs 1 st aus der US 4,048,915 bekannt.

Die EP 1685047 A1 offenbart eine Abstapelvorrichtung mit vier Entstaplerschrauben, die jeweils an einer Ecke bezogen auf den Behälterstapel angeordnet sind. Bezogen auf die Seiten des Behälterstapels sind allseitig Führungselemente vorgesehen. Nachteilig an dieser Ausführung ist der konstruktiv hohe Aufwand von vier angetriebenen Entstaplerschrauben, und die Anordnung der vier Entstaplerschrauben erlauben keine Handhabung kleiner Behälter bzw. keine Reihe von nahe beieinander liegenden Behälterstapel.

Aufgabe der Erfindung ist es, eine vereinfachte Abstapelvorrichtung geeignet auch für kleine Schalen bereitzustellen.

Diese Aufgabe wird gelöst durch eine Abstapelvorrichtung mit den Merkmalen des Anspruchs 1. Vorteilhafte Weiterbildungen der Erfindung sind in den Unteransprüchen angegeben.

Die erfindungsgemäße Abstapelvorrichtung umfasst Entstaplerschrauben zum Vereinzeln und Abstapeln von Schalen eines Schalenstapels, wobei jede Entstaplerschraube eine als helixförmige Aussparung ausgebildete Wendel aufweist. Die Erfindung zeichnet sich dadurch aus, dass zwei Entstaplerschrauben, die eine gleiche Drehrichtung und eine gleiche Windungsrichtung aufweisen, für einen gemeinsamen Schalenstapel vorgesehen sind. Dies ermöglicht eine Handhabung einer Reihe von mehreren nebeneinander angeordneten Traystapeln, die nur einen geringen Abstand zueinander aufweisen, da die Entstaplerschrauben in zwei gegenüberliegenden Reihen und jeweils mittig zum zu entstapelnden Schalenstapel vorgesehen sind. Dies ermöglicht auch ein Entstapeln von sehr viel kleineren Schalen gegenüber der Abstapelvorrichtung gemäß dem Stand der Technik, bei der jeweils vier Entstaplerschrauben an den vier Ecken des Schalenstapels vorgesehen sind.

Dabei sind die zwei Entstaplerschrauben vorzugsweise derart angeordnet, dass die Schale an zwei gegenüberliegenden Seitenflächen erfassbar und nach unten transportierbar ist.

Bei der Erfindung weist die Wendel beider Entstaplerschrauben eine Kontakthöhe auf, die zumindest im Wesentlichen (d.h. bis auf eine Abweichung von max. 5 - 10%) einer Flanschhöhe des Schalenflansches entspricht, um die Schalen besonders sicher formschlüssig halten und entstapeln zu können.

Die Kontakthöhe (oder synonym: der vertikale Kontaktabstand) der Wendeln ist wie folgt definiert. Jede Wendel ist eine helixförmig verlaufende Aussparung in der Außenwand einer Entstaplerschraube. An jedem Punkt hat diese helixförmige Aussparung einen etwa rechteckigen Querschnitt, der begrenzt ist von im Wesentlichen horizontalen Ober- und Unterseiten, einer parallel zur Drehachse der Entstaplerschraube verlaufenden Innenseite und einer ebenfalls dazu parallelen, offenen Außenseite. Die Oberseite der helixförmigen Aussparung geht an einer oberen Außenkante in die in der Regel zylindrische Außenwand der Entstaplerschraube über, die Unterseite entsprechend an einer unteren Außenkante. Legt man nun eine virtuelle Tangentialebene an die Innenseite der helixförmigen Aussparung der Wendel an, so hat diese virtuelle, senkrecht zum Radius der Entstaplerschraube stehende Tangentialebene in der ansteigenden Richtung der Wendel einen ersten Schnittpunkt mit der unteren Außenkante der Wendel, in der abfallenden Richtung der Wendel einen zweiten Schnittpunkt mit der oberen Außenkante der Wendel. Die Kontakthöhe (oder synonym der vertikale Kontaktabstand) ist definiert als der Abstand dieser beiden Schnittpunkte projiziert auf die Axialrichtung der Entstaplerschraube. In einer besonders vorteilhaften Ausführung weist die Wendel einen konstanten vertikalen Kontaktabstand (Kontakthöhe) zwischen einer Oberseite und einer Unterseite der Wendel auf, sodass die Schale an vier Punkten geführt wird. Dabei liegt eine erste Seite des Schalenflansches an einer oberen Fläche der Wendel der ersten Entstaplerschraube und die gegenüber der ersten Seite liegende zweite Seite des Schalenflansches an einer oberen Fläche der Wendel der zweiten Entstaplerschraube an. Ebenso liegt die erste Seite des Schalenflansches an einer unteren Fläche der Wendel der ersten Entstaplerschraube und die gegenüber der ersten Seite liegende zweite Seite des Schalenflansches an einer unteren Fläche der Wendel der zweiten Entstaplerschraube an. Die so räumlich diagonal angeordneten vier Führungspunkte sorgen für eine horizontale Zwangsführung der Schale beim Vereinzeln bzw. beim Transport einer einzelnen Schale nach unten. Die Kontakthöhe der Wendel entspricht der Flanschhöhe der Schale, um die Zwangsführung mittels Formschluss ausführen zu können.

Die Entstaplerschrauben sind dazu konfiguriert, jeweils eine Seite des Schalenflansches mit jeweils einem Berührpunkt mit der Außenkante der Oberseite und der Unterseite ihrer Wendel zu führen, so dass bei der Vereinzelung mittels der zwei an gegenüberliegenden Schalenflanschseiten angeordnete Entstaplerschrauben eine räumliche Vierpunkt-Führung dazu führt, dass die Lage der Schale durch die Lage der Wendel der zwei Entstaplerschrauben festlegt ist. Vorzugsweise sind wenigstens zwei Führungsvorrichtungen an den zwei gegenüberliegenden Seiten der Schale angeordnet, die nicht von den zwei Entstaplerschrauben ergriffen werden, wobei die zwei Führungsvorrichtungen vertikal ausgerichtet sind und derart ausgestaltet bzw. dazu konfiguriert sind, eine bereits vereinzelte und die Entstaplerschrauben nach unten verlassende Schale zu führen. Dies führt zu einer exakten Auftreffposition der Schale mit ihrem Schalenboden auf eine unter ihr befindliche Transporteinrichtung, da die Schale auch noch ohne Kontakt mit den Entstaplerschrauben an wenigstens zwei Seiten der Schale geführt ist und die verbleibende Höhe vertikal fallend vollzieht, womit höchstens minimale Abweichungen von der gewünschten Auftreffposition erreicht werden.

Die Führungsvorrichtungen stehen dabei vorzugsweise um wenigstens 5 mm weiter vertikal nach unten vor als das Ende der Wendel der Entstaplerschrauben, um eine sichere Führung nur durch die Führungsvorrichtungen selbst ohne die Entstaplerschrauben zu gewährleisten.

Dabei können weitere Führungsvorrichtungen an den Schalenflanschseiten der Schale vorgesehen sein, um das Führungsverhalten der Schale während des Vorganges der Vereinzelung weiter zu verbessern.

Im Folgenden wird ein vorteilhaftes Ausführungsbeispiel der Erfindung anhand einer Zeichnung näher dargestellt. Im Einzelnen zeigen:
- Fig. 1: eine schematische Ansicht einer erfindungsgemäßen Abstapelvorrichtung,
- Fig. 2: eine perspektivische Ansicht der Entstaplerschrauben,
- Fig. 3: eine Draufsicht auf die Entstaplerschrauben,
- Fig. 4: eine schematische Schnittansicht A - A und
- Fig. 5: eine weitere Draufsicht auf die Entstaplerschrauben.

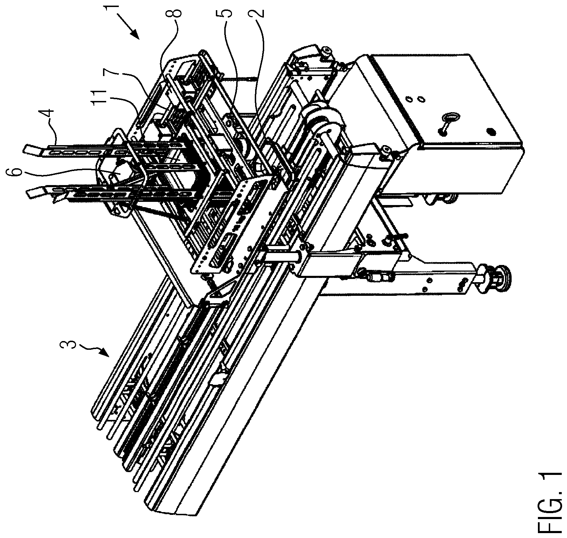

Figur 1 zeigt eine erfindungsgemäße Abstapelvorrichtung 1, die dazu konfiguriert ist, um vorgefertigte Schalen 2 einzeln auf eine Transporteinheit 3 fallen zu lassen, um die Schale 2, auch als Tray bezeichnet, anschließend einer Füllstation oder Einlegestation einer Verpackungsmaschine zuzuführen. Die Abstapelvorrichtung 1 weist Vertikalführungen 4 auf, um einen Schalenstapel 11 aufzunehmen. Zwei an den Schalen 2 angreifende Entstaplerschrauben 5 werden von einem gemeinsamen Motor 6, vorzugsweise von einem Servomotor, angetrieben. Die zwei Entstaplerschrauben 5 sind mittels jeweils eines Getriebes 8 für jede Entstaplerschraube 5 auf einer gemeinsamen Getriebewelle 7 angebracht und entlang dieser Getriebewelle 7 verschiebbar, um an unterschiedliche Traygrößen anpassbar zu sein.

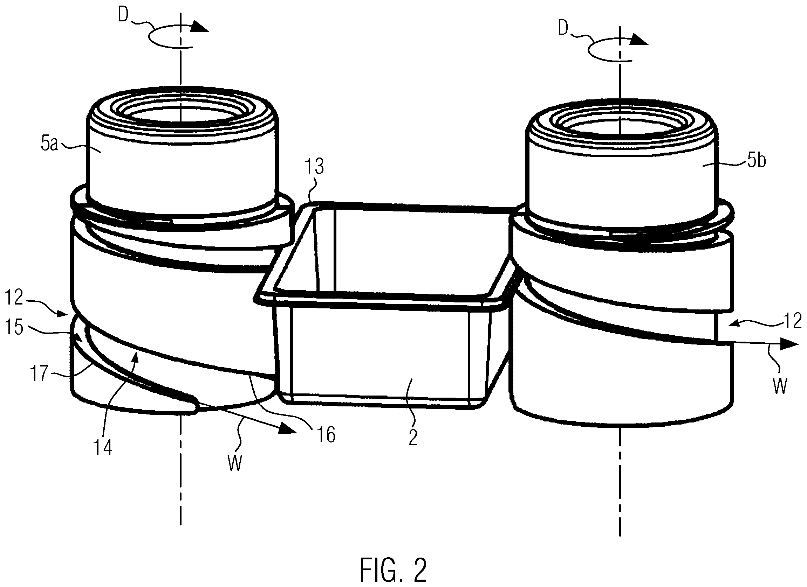

Figur 2 zeigt eine perspektivische Ansicht der zwei Entstaplerschrauben 5a und 5b, die beide die gleiche Drehrichtung D, nämlich hier im Uhrzeigersinn, aufweisen. Jede Entstaplerschraube 5a, 5b weist eine Wendel 12 auf, die als helixförmige Aussparung ausgebildet ist. Die Windungsrichtung W der Wendel ist bei beiden Entstaplerschrauben 5a, 5b gleich, um die Schale 2 nach unten zu transportieren. Die Windungsrichtung W ist definiert durch die Neigung nach unten bei einer Drehrichtung D im Uhrzeigersinn. Die Schale 2 wird von den Entstaplerschrauben 5a, 5b jeweils an gegenüberliegenden Seiten eines Schalenflansches 13 der Schale 2 in der Wendel 12 aufgenommen. Die Wendel 12 weist eine Oberseite 14 und eine Unterseite 15, sowie jeweils eine obere Außenkante 16 und eine untere Außenkante 17 auf.

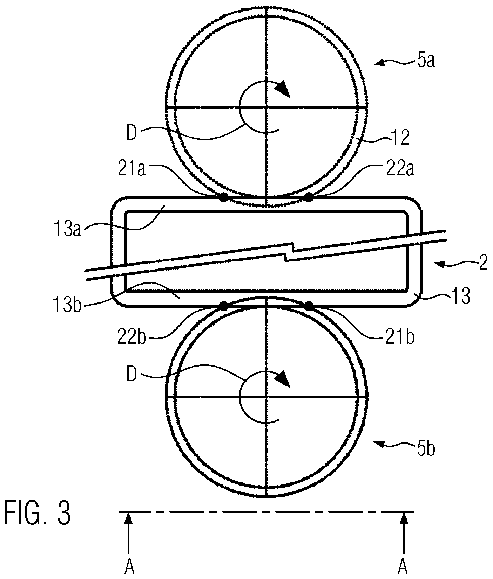

Figur 3 zeigt eine Draufsicht auf die Entstaplerschrauben 5a, 5b, wobei zwischen der zeichnerisch oben in gepunkteter Liniendarstellung dargestellten Entstaplerschraube 5a und der zeichnerisch unten mit einer Strich-Punkt-Linie dargestellten Entstaplerschraube 5b die Schale 2 von der Wendel 12 beider Entstaplerschrauben 5a, 5b aufgenommen ist und durch eine Drehung in der Drehrichtung D der Entstaplerschrauben 5a, 5b in die Zeichenebene hinein bewegt wird. Die Schale 2 steht mit ihrem umlaufenden Schalenflansch 13 mit jeweils zwei Berührpunkten an den Außenkanten 16, 17 der Oberseite 14 und der Unterseite 15 der jeweiligen Wendel 12 der Entstaplerschrauben 5a, 5b, wie in Figur 2 gezeigt, in Kontakt.

Die zeichnerisch oben angeordnete erste Schalenflanschseite 13a der Schale 2 berührt die Unterseite 15 der ersten Entstaplerschraube 5a an der Außenkante 17 an einem ersten, zeichnerisch links gelegenen Kontaktpunkt 21a und die Oberseite 14 der ersten Entstaplerschraube 5a an der Außenkante 16 an einem zweiten, zeichnerisch rechts gelegenen Kontaktpunkt 22a. Analog dazu berührt die zeichnerisch unten angeordnete zweite Schalenflanschseite 13b der Schale 2 die Unterseite 15 der zweiten Entstaplerschraube 5b an der Außenkante 17 an einem ersten, zeichnerisch rechts gelegenen Kontaktpunkt 21b und die Oberseite 14 der zweiten Entstaplerschraube 5b an der Außenkante 16 an einem zweiten, zeichnerisch links gelegenen Kontaktpunkt 22b.

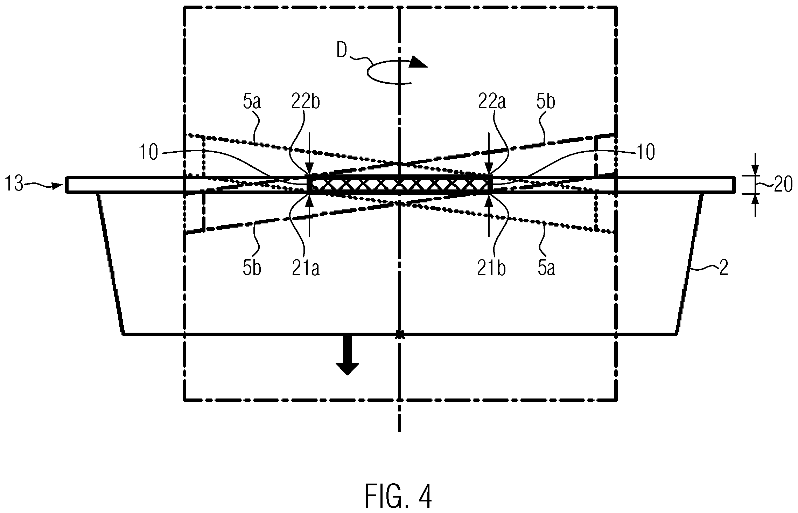

In Figur 4 werden die vier Kontaktpunkte 21a, 22a, 21b und 22b in einer Ansicht A - A der Figur 3 nochmals dargestellt, wobei die Entstaplerschrauben 5a, 5b jeweils mit nur einem Wendelabschnitt dargestellt sind. Die Wendel 12 der ersten Entstaplerschraube 5a ist in der gepunkteten Liniendarstellung und die Wendel 12 der zweiten Entstaplerschraube 5b mit einer Strich-Punkt-Linie zur besseren Übersichtlichkeit dargestellt. Die in Figur 3 gezeigte Drehung D der Entstaplerschrauben 5a, 5b führt zu einer Bewegung der Schale 2 in Pfeilrichtung nach unten. Dabei wird die Schale 2 an ihrem Flansch 13 jeweils an den Außenkanten 16, 17 der Oberseite 14 und der Unterseite 15 beider Wendeln 12, also an vier Punkten, sicher gehalten und nach unten geführt. Es liegt ein diagonal bzw. über Kreuz gelegener Formschluss vor.

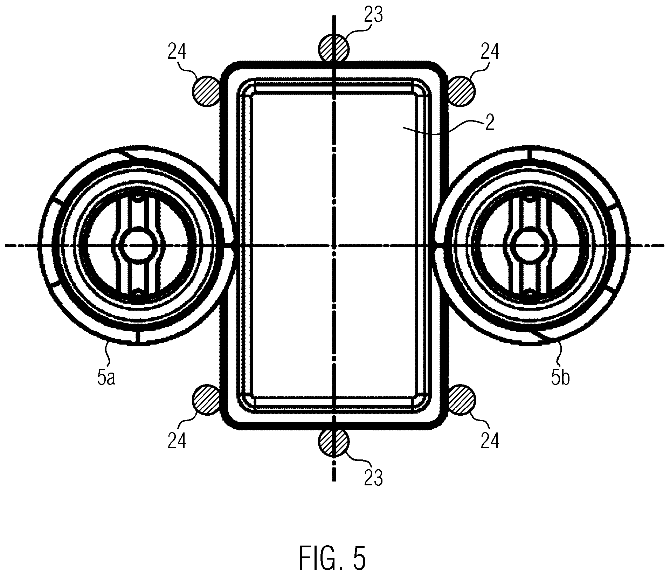

Um eine Verdrehung der Schale 2 weiter zu verhindern, sind Führungsvorrichtungen 23 vorgesehen (s. Fig. 5). Bei einer Steigungsänderung der Wendel 12 ist die Schale 2 bis zum Verlassen der Wendel 12 am unteren Ende der Entstaplerschrauben 5a, 5b prozesssicher geführt.

Figur 4 zeigt auch die Flanschhöhe 20 des Schalenflansches 13 und die Kontakthöhe 10 beider Wendeln 12, wobei die Kontakthöhe 10 der Flanschhöhe 20 der Schale 2 entspricht. Außerdem wird aus dem Zusammenspiel der Figuren 3 und 4 ersichtlich, wie die Kontakthöhe (d.h. der vertikale Kontaktabstand) definiert ist. In Figur 3 liegt die Schale 2 mit ihrem Schalenflanschabschnitt 13a an der Innenseite der Wendel 12 der Entstaplerschraube 5a an. Eine virtuelle Tangentialebene wird demnach aufgespannt, die einerseits parallel zur Drehachse der Entstaplerschraube 5a ist und andererseits die Außenkante des Schalenflanschabschnitts 13a enthält, wenn der Schalenflansch an der Innenseite der Wendel 12 anliegt.

Wie in den Figuren 3 und 4 gezeigt, ergeben sich zwei Schnittpunkte dieser Tangentialebene mit der Wendel 12, nämlich zum Einen ein Schnittpunkt 21a mit der Außenkante des ansteigenden Bereichs der Wendel 12 (d.h. in Drehrichtung D der Entstaplerschraube, ausgehend vom Schnittpunkt der Wendel-Innenseite mit der virtuellen Tangentialebene), zum Anderen ein weiterer Schnittpunkt 22a mit der Außenkante 16 des abfallenden Teils der Wendel (d.h. entgegen der Drehrichtung D der Entstaplerschraube, ausgehend vom Schnittpunkt der Wendel-Innenseite mit der virtuellen Tangentialebene). Der vertikale Abstand zwischen diesen beiden Kontaktpunkten, also projiziert auf die Richtung der Drehachse der Entstaplerschraube 5a (s. Figur 4) ist die Kontakthöhe. In Figur 4 ist zu sehen, dass diese im Wesentlichen der Flanschhöhe 20 der Schale 2 entspricht.

Figur 5 zeigt eine Draufsicht auf die Entstapelvorrichtung 1 mit vertikal ausgerichteten Führungsvorrichtungen 23 in Form von Rundstangen an denjenigen Seiten des Schalenflansches 13, die nicht mit den Entstaplerschrauben (5a, 5b) in Kontakt stehen. Denkbar sind weitere Führungsvorrichtungen 24 an den anderen Schalenflanschseiten 13a, 13b.

## Patentansprüche

1. Schalenabstapelvorrichtung (1), umfassend Entstaplerschrauben (5a, 5b) zum Vereinzeln und Abstapeln von Schalen (2) eines Schalenstapels (11), wobei jede Entstaplerschraube (5a, 5b) eine als helixförmige Aussparung ausgebildete Wendel (12) aufweist, wobei zwei Entstaplerschrauben (5a, 5b), die eine gleiche Drehrichtung (D) und eine gleiche Windungsrichtung (W) aufweisen, einem gemeinsamen Schalenstapel (11) zugeordnet sind,
wobei die Wendel (12) beider Entstaplerschrauben (5a, 5b) eine Kontakthöhe (10) aufweisen, die einer Flanschhöhe (20) des Schalenflansches (13) zumindest im Wesentlichen entspricht,
und wobei die Kontakthöhe (10) der Wendel (12) derart gestaltet ist, dass der Schalenflansch (13) der Schale (2) zwischen jeweils einer Außenkante (16, 17) der Oberseite (14) und der Unterseite (15) der Wendel (12) führbar ist,
**dadurch gekennzeichnet, dass** die Entstaplerschrauben (5a, 5b) dazu konfiguriert sind, jeweils eine Seite des Schalenflansches (13) mit jeweils einem Berührpunkt (22a, 22b) mit der Außenkante (16, 17) der Oberseite (14) ihrer Wendel (12) und einem weiteren Berührpunkt (21a, 21b) mit der Unterseite (15) ihrer Wendel (12) zu führen.

2. Schalenabstapelvorrichtung nach Anspruch 1, **dadurch gekennzeichnet, dass** die zwei Entstaplerschrauben (5a, 5b) derart angeordnet sind, dass die Schale (2) an zwei gegenüberliegenden Seiten (13a, 13) eines Schalenflansches (13) erfassbar und nach unten transportierbar ist.

3. Schalenabstapelvorrichtung nach einem der vorangehenden Ansprüche, **dadurch gekennzeichnet, dass** wenigstens zwei Führungsvorrichtungen (23) an denjenigen zwei gegenüberliegenden Seiten der Schale (2) angeordnet sind, die nicht von den zwei Entstaplerschrauben (5a, 5b) ergriffen werden, wobei die zwei Führungsvorrichtungen (23) vertikal ausgerichtet sind und dazu konfiguriert sind, eine bereits vereinzelte und die Entstaplerschrauben (5a, 5b) nach unten verlassene Schale (2) zu führen.

4. Schalenabstapelvorrichtung nach Anspruch 3, **dadurch gekennzeichnet, dass** die zwei Führungsvorrichtungen (23) um wenigstens 5 mm weiter vertikal nach unten stehen als das untere Ende der Wendel (12) der Entstaplerschrauben (5a, 5b).

5. Schalenabstapelvorrichtung nach Anspruch 3 oder 4, **dadurch gekennzeichnet, dass** weitere Führungsvorrichtungen (24) an den von den Entstaplerschrauben (5a, 5b) erfassten Schalenflanschseiten (13a, 13b) der Schale (2) vorgesehen sind.

## Claims

1. A tray destacker (1) comprising destacking screws (5a, 5b) for singulating and destacking trays (2) of a tray stack (11), each destacking screw (5a, 5b) comprising a helix (12) configured as a helical recess, wherein two destacking screws (5a, 5b), which have an identical direction of rotation (D) and an identical direction (W) of windings, are associated with a common tray stack (11),
wherein the helixes (12) of both destacking screws (5a, 5b) have a contact height (10) corresponding, at least substantially, to a flange height (20) of the tray flange (13), and wherein the contact height (10) of the helixes (12) is configured such that the tray flange (13) of the tray (2) is guidable between a respective outer edge (16, 17) of the upper side (14) and of the lower side (15) of the helixes (12), **characterized in that** the destacking screws (5a, 5b) are configured for guiding a respective side of the tray flange (13) with a respective contact point (22a, 22b) with the outer edge (16, 17) of the upper side (14) of their helixes (12) and a further contact point (21a, 21b) with the lower side (15) of their helixes (12).

2. The tray destacker according to claim 1, **characterized in that** the two destacking screws (5a, 5b) are arranged such that the tray (2) is able to be gripped at two opposed sides (13a, 13b) of a tray flange (13) and to be conveyed downwards.

3. The tray destacker according to one of the preceding claims, **characterized in that** at least two guiding devices (23) are arranged on the two opposed sides of the tray (2) which are not gripped by the two destacking screws (5a, 5b), said two guiding devices (23) being vertically oriented and configured to guide a tray (2) which has already been singulated and which leaves the destacking screws (5a, 5b) in a downward direction.

4. The tray destacker according to claim 3, **characterized in that** the two guiding devices (23) project in a vertically downward direction beyond the lower ends of the helixes (12) of the destacking screws (5a, 5b) by at least 5 mm.

5. The tray destacker according to claim 3 or 4, **characterized in that** additional guiding devices (24) are provided on those tray flange sides (13a, 13b) of the tray (2) which are gripped by the destacking screws (5a, 5b).

## Revendications

1. Dispositif de désempilage de coques (1), comprenant des vis de désempilage (5a, 5b) pour séparer et dépiler les coques (2) d'une pile de coques (11), chaque vis de désempilage (5a, 5b) ayant une hélice (12) formée comme un évidement hélicoïdal, dans lequel deux vis de désempilage (5a, 5b), qui ont le même sens de rotation (D) et le même sens d'enroulement (W), sont associées à une pile de coques (11) commune,
dans lequel les bobines (12) des deux vis de désempilage (5a, 5b) ont une hauteur de contact (10) qui correspond au moins en grande partie à une hauteur de bride (20) de la bride de la coque (13),
et dans lequel la hauteur de contact (10) de l'hélice (12) est conçue de telle sorte que la bride (13) de la coque (2) puisse être guidée entre respectivement un bord extérieur (16, 17) de la face supérieure (14) et la face inférieure (15) de l'hélice (12),
**caractérisé en ce que** les vis de désempilage (5a, 5b) sont configurées pour guider un côté de la bride de coque (13) à la fois, chacune avec un point de contact (22a, 22b) avec le bord extérieur (16, 17) de la face supérieure (14) de son hélice (12) et un autre point de contact (21a, 21b) avec la face inférieure (15) de son hélice (12).

2. Dispositif de désempilage de coques selon la revendication 1, **caractérisé en ce que** les deux vis de désempilage (5a, 5b) sont disposées de telle sorte que la coque (2) peut être saisie sur deux côtés opposés (13a, 13) d'une bride de coque (13) et transportée vers le bas.

3. Dispositif de désempilage de coques selon l'une des revendications précédentes, **caractérisé en ce qu'au** moins deux dispositifs de guidage (23) sont disposés sur les deux côtés opposés de la coque (2) qui ne sont pas engagés par les deux vis de désempilage (5a, 5b), les deux dispositifs de guidage (23) étant orientés verticalement et configurés pour guider une coque (2) qui a déjà été séparée et a laissé les vis de désempilage (5a, 5b) vers le bas.

4. Dispositif de désempilage de coques selon la revendication 3, **caractérisé en ce que** les deux dispositifs de guidage (23) font saillie verticalement vers le bas d'au moins 5 mm plus loin que l'extrémité inférieure de l'hélice (12) des vis de désempilage (5a, 5b).

5. Dispositif de désempilage de coques selon la revendication 3 ou 4, **caractérisé en ce que** d'autres dispositifs de guidage (24) sont prévus sur les côtés de la bride de la coque (13a, 13b) de la coque (2) qui sont saisis par les vis de désempilage (5a, 5b).
